# EUROPEAN PATENT SPECIFICATION

(11) **EP 1 697 168 B1**
(45) Date of publication and mention of the grant of the patent: **31.12.2008**
(21) Application number: 04797066.0
(22) Date of filing: 19.11.2004
(51) Int. Cl.: B60R 7/04, B60R 11/02, F16M 11/12, F16M 13/02

(54) **VEHICLE SEAT MOUNTING FOR AN OBJECT, EG COMPUTER**
FAHRZEUGSITZMONTAGE FÜR EIN OBJEKT, ZUM BEISPIEL EINEN COMPUTER
MONTAGE DE SIEGE DE VEHICULE DESTINE A UN OBJET, PAR EXEMPLE UN ORDINATEUR

(30) Priority: 19.11.2003 AU 2003100947; 26.02.2004 AU 2004100280
(43) Date of publication of application: 06.09.2006
(73) Proprietor: Industrial Evolution Design PTY Ltd., Homebush West, New Sout Wales 2140 (AU)
(72) Inventor: FRANZI, Brett, Justin Eric, Homebush West, New South Wales 2140 (AU)
(74) Representative: CAPRI
(86) International application number: PCT/AU2004/001618
(87) International publication number: WO 2005/049377

(56) References cited:
- EP-A- 0 219 932
- EP-A1- 0 219 932
- WO-A-98/33678
- WO-A1-98/33678
- US-A- 2 692 638
- US-A- 4 832 241
- US-A- 5 542 589

## Description

### FIELD OF THE INVENTION

The present invention relates generally to a device for mounting an object to a passenger seat of a motor vehicle and has particular application to securing the object to the passenger seat both in normal usage and in the event of any emergency situation such as rapid braking or indeed an accident involving impact.

### BACKGROUND OF THE INVENTION

Existing devices for mounting objects to a seat of a motor vehicle (such as a baby capsule and child car seat) are generally anchored into position using standard seat) belt arrangements. Furthermore, the existing devices are for specific types of objects (for example, a baby) and depend on full insertion and latching of the seat belt arrangement. This can be a cumbersome task and there is a danger it may be imperfectly formed.

The existing devices also do not offer a general solution to a device for mounting and supporting an object when perhaps only a lap restraint belt is available and/or an object is desired to be mounted on a passenger seat adjacent a vehicle driver such as a courier.

Documents WO 98/33678 which corresponds to the preamble of claim 1, US-4,832,241 and US-2,692,638 disclose existing devices.

### SUMMARY OF THE INVENTION

According to a first aspect of the present invention, there is provided a device for mounting and supporting a load on a seat having a co-operating seat belt, having the features of claim 1.

Preferably, the rear portion of generally T-shaped form with the first and second retaining elements extending respectively upwardly and downwardly as rear projecting walls to engage respectively the rear of a back rest and the rear of the seat, other embodiments may be preferred as advantageous.

Preferably, the first and second retaining elements are spaced from one another by an amount corresponding to the thickness of a back rest and extend upwardly from the base and are configured to engage under a lower portion of the back rest to retain the device in position.

Preferably, the device is in the form of a moulded base having integral upstanding rear walls spaced from one another to form a U-shaped cross sectional shape to be engaged under the rear of a seat back. This is especially advantageous when the seat back is in the form of a resilient cushion and the installation is achieved by the base being lowered at a steep angle to engage the walls respectively around the lower portion of the back cushion and then to pivot the device downwardly to lay the base down to be supported on the seat base.

This arrangement lends itself to specially advantageous industrial designs such as those produced by moulding in one piece with smooth profiles over the whole structure.

Preferably, the base has a substantially flat body portion and an upwardly extending front portion having a forward edge recess for accommodating and retaining a lap seat belt. One embodiment can have a smoothly curved nose having a grooved profile for retaining a lap belt with upper and lower edges for restraining seat belt movement upwardly or downwardly.

Preferably, the device comprises an arrangement on the front portion for swivel mounting of an appliance such as a hand held computer and to provide a quick release system for clamping such a computer into position and removing it as may be required.

Preferably, the device comprises a receiving tray on the base portion between the means for mounting and a seat back for documents to be retained in position.

Such a device can readily be constructed and, subject to traffic regulations, even used while the driver is controlling a moving vehicle. The computer could for example be driven by a navigation system providing navigation information visually and/or through audio communications as well as provide other functions.

Most importantly however, devices according to the present invention can be safely and easily installed in most vehicles and lend themselves to being removed and changed from vehicle to vehicle according to the user's needs. Reliable location with secure engagement with a cushioned conventional seat back can be achieved without damage to the vehicle and at least preferred embodiments can minimise the chance of the device becoming a projectile even if the seat belt is not perfectly engaged.

### BRIEF DESCRIPTION OF THE DRAWINGS

For illustrative purposes an embodiment of the present invention will now be described with reference to the accompanying drawings, in which:
figure 1 shows a perspective view from the front of a device that embodies the present invention;
figure 2 shows the device of figure 1 with an optional swivel mount installed for a hand held computer bracket;
figure 3 is an underneath view of the device shown in figure 1;

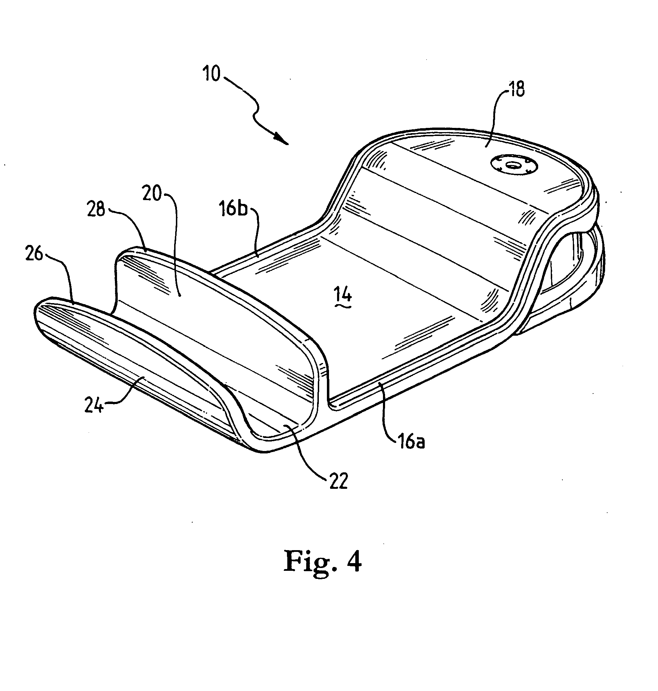

figure 4 is a rear view of the device shown in figure 1;
figure 5 shows the device of figure 1 fitted to a passenger seat of a vehicle;
figure 6 is an illustration of another embodiment of the device of figure 1, which has a T-shaped end structure;
figure 7 illustrates a computing device cradle mounted to the device shown in figure 1; and
figure 8 shows yet a further embodiment of the device shown in figure 1.

### AN EMBODIMENT OF THE INVENTION

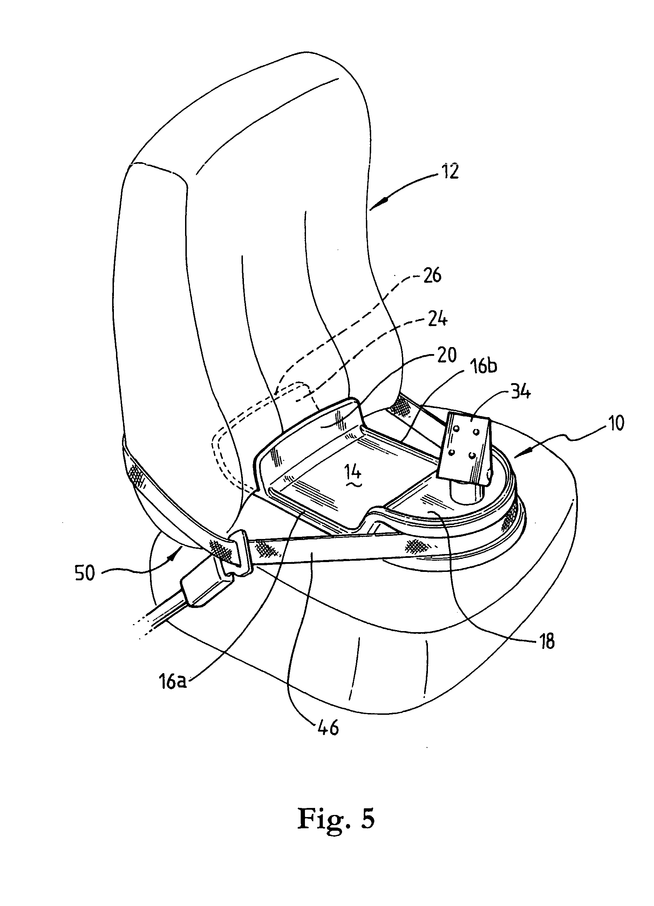

Figure 5 shows an embodiment of a device 10 for mounting an object to a passenger seat 12 of a motor vehicle. The device 10 has particular application to mounting objects such as computer terminals to the passenger seat 12. However, persons skilled in the art will readily appreciate that other embodiments of the device 10 can be used for mounting other objects to the passenger seat 12 and not just computer terminals. The device 10 is made using a one piece moulding technique from a plastic material with smoothly curved profiles so as to be readily fitted onto the passenger seat 12.

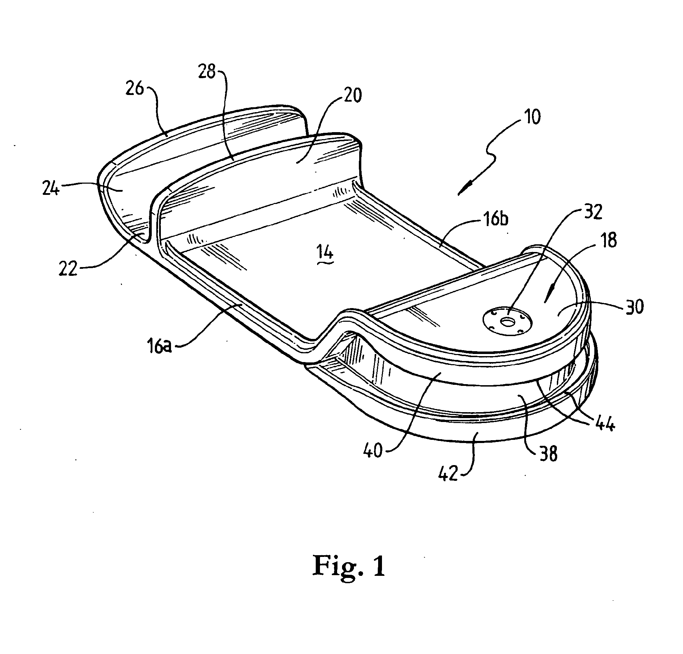

With reference to figure 1, the device 10 has a flat base 14 with upper parallel side rails 16 that define a load carrying zone suitable for a file, a book or paperwork. The base 14 has a curved front nose 18, a rear wall 20, and a rearwardly projecting interconnecting wall 22 leading to an upwardly curved back wall 24. The walls 20 and 24 each have rounded corners and curved top edges 26 and 28 respectively.

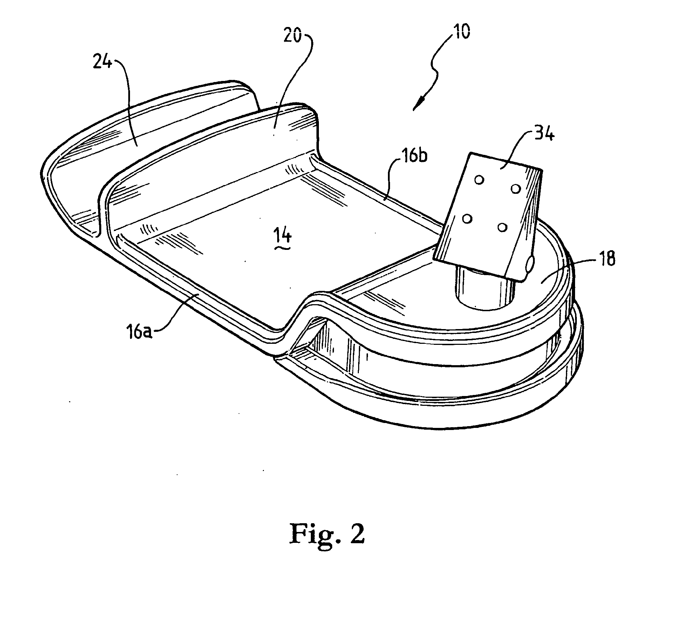

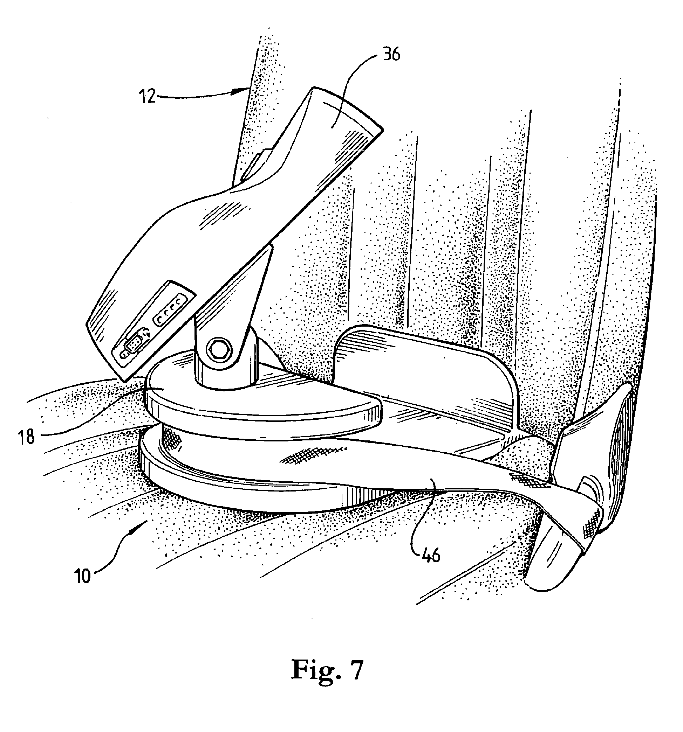

The front nose 18 has a raised platform 30 having a mounting recess 32 for an accessory mounting bracket 34 such as the swivel bracket, which can be seen in figure 2. The swivel bracket 34 can mount a quick release cradle 36 (see figure 7) for an accessory such as a hand held computer. The front nose 18 also includes a curved skirt 38 extending between upper and lower collars 40 and 42, each of which are spaced radially outwardly from the skirt 38 and have respective flanges 44 which extend partially over the skirt 38 to define a receiving groove having retention lips for accommodating and retaining a lap element 46 (see figure 7) of a conventional seat belt.

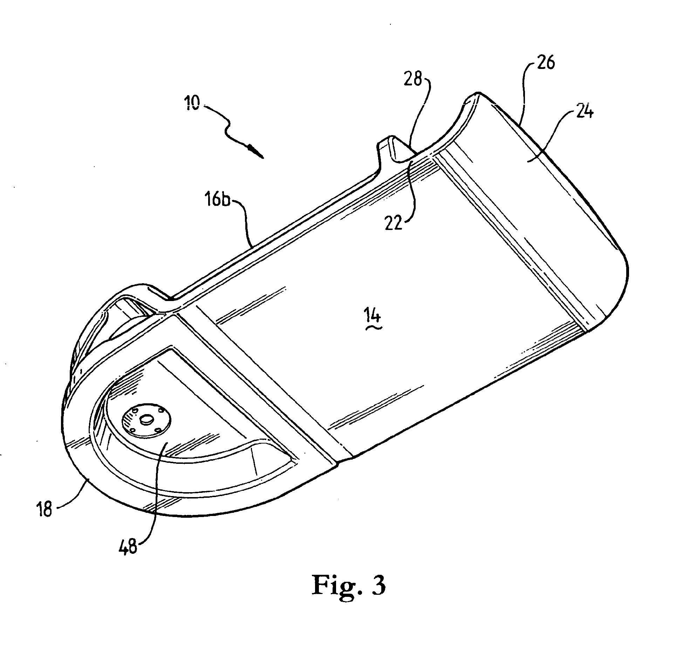

As shown in figure 3, to provide lightness and facilitate moulding of the device 10, a cavity 48 extends into the nose potion 18.

As described previously, an accessory-receiving cradle 36 is mounted to the pivotal bracket 34 and installation into a vehicle to obtain the arrangement shown in figure 5 is quickly and easily accomplished. The profile of the back wall 24 with its curved upper edge 26 is designed to facilitate being inserted below and behind the bottom edge 50 of the seat 12 back cushion (see figure 5). The device 10 is offered up at a steep angle of the base 14 to the seat 12 back cushion, the wall 24 is slid under the bottom of the seat 12 back cushion and the device 10 rotated downwardly to achieve the insertion with the seat 12 back cushion then located between the walls 20 and 24. This can be effected with the accessory bracket 34 or the cradle 36.

It is intended that the lap element 46 then be secured around the nose 18 and the attachment fastened. The design, however, resists forward projection of the device 10 in the event of an accident even if the lap belt 46 is not correctly located, tensioned or closed.

A typical application of the device 10 is for fitting and moving between vehicles such as courier vehicles but the device 10 in the form shown may be used in other installations of a similar character. Furthermore the formation of the device 10 can be altered.

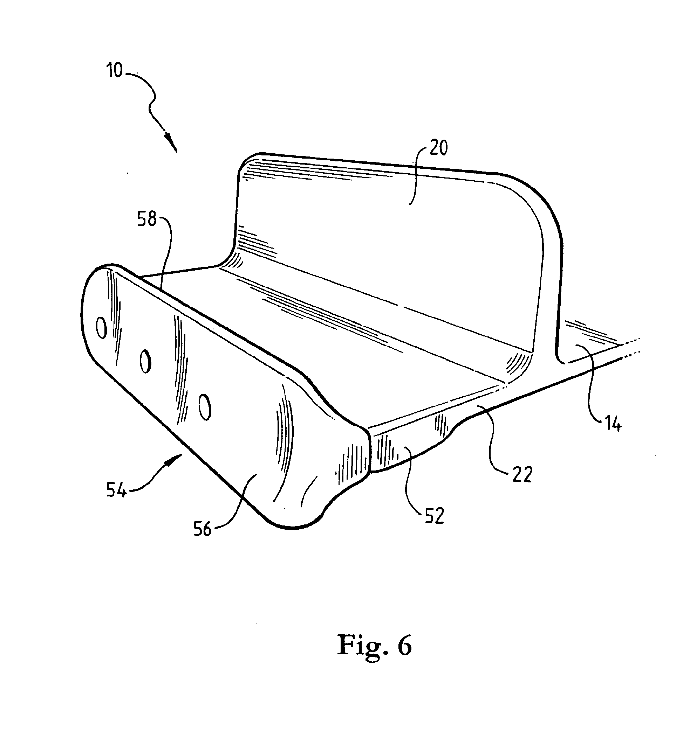

Referring now to figure 6, a representation is provided of an alternative embodiment of the device 10 in which a generally T-shaped end structure is formed. In this embodiment the rearwardly extending interconnection wall 22 is planar and is dimensioned to have a width equivalent to the seat 12 back cushion but has a thickened rearwardly extending integral wedge-shaped portion 52 to leave a rearwardly facing back wall onto which is screwed a rear strip 54. The strip 54 has a curved rear wall 56 and a front wall 58 which is essentially parallel to the wall 20.

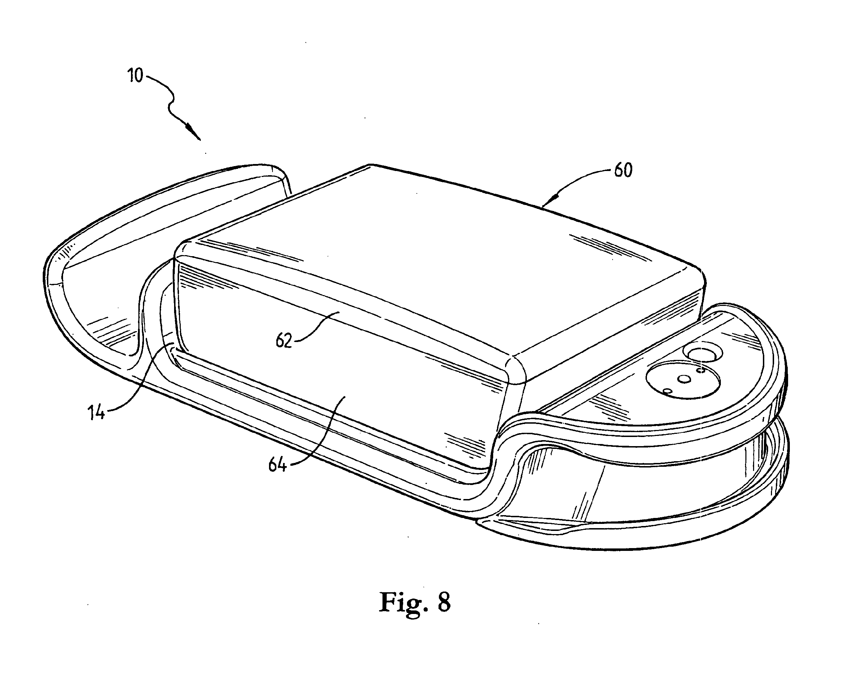

In yet a further embodiment of the device 10, which is shown in figure 8, the device 10 comprises a housing 60 that is attached to the base 14 of the device 10. The housing provides a means for storing a computing device (which is mounted to the device 10) when not in use or any other type of objects such as a file. This is advantageous as it allows the computing device or other objects to be stored out of sight when, for example, the vehicle is parked in a street. The housing comprises a lid 62 that is hingedly connected to a body portion 64 of the housing. The lid 62 can be opened and closed to show the object therein.

In summary, embodiments of the invention can be formed in a light-weight, inexpensive and very portable form which can nevertheless be easily and reliably installed into conventional vehicle seats without risk of damage to upholstery. Embodiments can be smoothly curved and styled and produced in robust moulded plastics materials with the ability to be fitted with a wide range of support cradles for different objects such as different hand held computers.

It is to be understood that, if any prior art publication is referred to herein, such reference does not constitute an admission that the publication forms a part of the common general knowledge in the art, in Australia or any other country.

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

## Claims

1. A device for mounting and supporting a load on a seat (12) having a co-operating seat belt (46), the device comprising:
a base (14) to be supported on a seat base;
a rear portion (20, 22, 24; 20, 22, 54) for engaging with a seat back;
a forward portion (38) for engaging with a seat belt designed as a lap restraint;
means (34) for mounting and retaining during normal travel a load supported on the base and **characterised by** the the rear portion having first and second retaining elements (20, 24; 56, 59) each extending generally at a substantival angle to the base and configured to engage witch respective front and rear surfaces of the back of the seat structure which extends at a substantial angle to the surface of the seat base on which the base is supported such that secure engagement is achieved to resist forward or backward motion of the device relative to the seat, irrespective of whether there is correct and effective engagement of the seat belt, and the forward portion having a recess extending around the forward portion for receiving and retaining the seat belt.

2. The device as claimed in claim 1, wherein the rear portion (54) of generally T-shaped form with the first and second retaining elements (56, 58) extending respectively upwardly and downwardly as rear projecting walls to engage respectively the rear of a back rest and the rear of the seat.

3. The device as claimed in claim 1, wherein the first and second retaining elements (20, 24) are spaced from one another by an amount corresponding to the thickness of a back rest and extend upwardly from the base and are configured to engage under a lower portion of the seat back to retain the device in position.

4. The device as claimed in claim 3, wherein the device is in the form of a moulded base having integral upstanding rear walls (20, 24) spaced from one another to form a U-shaped cross sectional shape to be engaged under the rear of a seat back.

5. The device as claimed in any one of the preceding claims, wherein the base has a substantially flat body portion and an upwardly extending portion (18) having a forward edge recess (38) for accommodating and retaining a lap seat belt.

6. The device as claimed in claim 5, comprising an arrangement (34) on the front portion for swivel mounting of an appliance and to provide a release system (36) for removably clamping the appliance into position.

7. The device as claimed in any one of the preceding claims, comprising a receiving tray (16a, 16b) on the base portion between the means for mounting and a seat back for documents to be retained in position.

## Patentansprüche

1. Vorrichtung zum Anbringen und Haltern einer Last auf einem Sitz (12), der einen mit ihm zusammenwirkenden Gurt(46) aufweist, wobei die Vorrichtung aufweist:
eine Basis (14) zur Anbringung auf einer Sitzbasis;
einen hinteren Abschnitt (20, 22, 24,; 20, 22, 54) zum Eingriff mit einer Sitzlehne;
einen vorderen Abschnitt (38) zum Eingriff mit einem Sitzgurt, der als Schoßrückhaltung ausgebildet ist;
Mittel (34) zum Anbringen und Zurückhalten einer Last während normaler Fahrt, welche auf der Basis angebracht ist, **dadurch gekennzeichnet, dass** der hintere Abschnitt erste und zweite Rückhalteelemente (22, 24; 56, 58) aufweist, von denen jedes sich allgemein unter einem erheblichen Winkel zu der Basis erstreckt und dazu ausgelegt ist, mit jeweiligen vorderen und hinteren Seiten der Rückenlehne der Sitzstruktur in Eingriff zu gelangen, die sich unter einem erheblichen Winkel zu der Fläche der Sitzbasis erstreckt, auf welcher die Basis angebracht ist, um einen sicheren Eingriff zu erzielen, um einer Vorwärts- oder Rückwärtsbewegung der Vorrichtung relativ zum Sitz entgegen zu wirken, und zwar ungeachtet davon, ob ein korrekter und effektiver Eingriff des Sitzgurtes vorliegt, und wobei der vordere Abschnitt eine Eintiefung aufweist, welche sich um den vorderen Abschnitt zur Aufnahme und Rückhaltung des Sitzgurtes erstreckt.

2. Vorrichtung nach Anspruch 1, wobei der hintere Abschnitt (54) allgemeine T-Form besitzt, wobei die ersten und zweiten Rückhalteelemente (56, 58) sich jeweils als hintere vorspringende Wände aufwärts und abwärts erstrecken, um jeweils mit der Rückseite der Lehne und der Rückseite des Sitzes in Eingriff zu gelangen.

3. Vorrichtung nach Anspruch 1, wobei die ersten und zweiten Rückhalteelemente (20, 24) von einander um ein Ausmaß beabstandet sind, welches der Dicke einer Lehne entspricht und wobei diese sich aufwärts ausgehend von der Basis erstrecken und dazu ausgelegt sind, unter einen unteren Abschnitt der Sitzlehne in Eingriff zu gelangen, um die Vorrichtung in Stellung rückzuhalten.

4. Vorrichtung nach Anspruch 3, wobei die Vorrichtung die Form einer geformten Basis aufweist, mit integralen hochstehenden Rückwänden (20, 24), welche voneinander beabstandet sind, um eine U-förmige Querschnittsform zu bilden, die unter die Rückseite einer Sitzlehne eingreift.

5. Vorrichtung nach einem der vorangehenden Ansprüche, wobei die Basis einen im Wesentlichen flachen Körperabschnitt und einen sich aufwärts erstreckenden Abschnitt (18) aufweist, der eine vordere Randeintiefung (38) zur Aufnahme und Rückhaltung eines Schoßsitzgurtes aufweist.

6. Vorrichtung nach Anspruch 5, aufweisend eine Anordnung (34) auf dem vorderen Abschnitt zur schwenkbaren Anbringung eines Geräts und zum Bereitstellen eines Freigabesystems (36) zum lösbaren Festklemmen des Geräts in seiner Position.

7. Vorrichtung nach einem der vorangehenden Ansprüche, aufweisend eine Aufnahmetablett (16a, 16b) auf dem Basisabschnitt zwischen dem Anbringungsmittel und einer Sitzlehne für Dokumente, die in ihrer Position rückgehalten werden sollen.

## Revendications

1. Dispositif pour monter et supporter une charge sur un siège (12) ayant une ceinture de sécurité (46) coopérante, le dispositif comprenant :
une base (14) destinée à être supportée sur une base de siège ;
une partie arrière (20, 22, 24 ; 20, 22, 54) pour se mettre en prise avec un dossier de siège ;
une partie avant (38) pour se mettre en prise avec une ceinture de sécurité conçue comme un dispositif de retenue ventral ;
des moyens (34) pour monter et retenir pendant un déplacement normal une charge supportée sur la base et **caractérisé par** la partie arrière qui a des premier et second éléments de retenue (20, 24 ; 56, 58), chacun s'étendant généralement selon un angle sensible par rapport à la base et configurés pour se mettre en prise avec les surfaces avant et arrière respectives du dossier de la structure de siège qui s'étend selon un angle sensible par rapport à la surface de la base de siège sur laquelle la base est supportée de sorte que l'on obtient une mise en prise sûre pour résister au mouvement vers l'avant ou vers l'arrière du dispositif par rapport au siège, indépendamment de savoir s'il existe une mise en prise correcte et efficace de la ceinture de sécurité, et la partie avant ayant un évidement s'étendant autour de la partie avant pour recevoir et retenir la ceinture de sécurité.

2. Dispositif selon la revendication 1, dans lequel la partie arrière (54) ayant généralement une forme de T avec les premier et second éléments de retenue (56, 58) s'étendant respectivement vers le haut et vers le bas en tant que parois en saillie arrière pour mettre en prise respectivement l'arrière d'un dossier et l'arrière du siège.

3. Dispositif selon la revendication 1, dans lequel les premier et second éléments de retenue (20, 24) sont espacés l'un de l'autre selon une quantité correspondant à l'épaisseur d'un dossier et s'étendent vers le haut à partir de la base et sont configurés pour se mettre en prise sous une partie inférieure du dossier pour retenir le dispositif en position.

4. Dispositif selon la revendication 3, dans lequel le dispositif se présente sous la forme d'une base moulée ayant des parois arrière verticales solidaires (20, 24) espacées l'une de l'autre pour former une forme transversale en U destinée à se mettre en prise sous l'arrière d'une dossier de siège.

5. Dispositif selon l'une quelconque des revendications précédentes, dans lequel la base a une partie de corps sensiblement plate et une partie s'étendant vers le haut (18) ayant un évidement de bord avant (38) pour loger et retenir une ceinture de sécurité ventrale.

6. Dispositif selon la revendication 5, comprenant une mise en prise (34) sur la partie avant pour monter sur pivot un appareil et pour fournir un système de déblocage (36) pour serrer l'appareil de manière amovible en position.

7. Dispositif selon l'une quelconque des revendications précédentes, comprenant un plateau de réception (16a, 16b) sur la partie de base entre les moyens de montage et un dossier de siège pour les documents à retenir en position.
